Europäisches Patentamt

European Patent Office

Office européen des brevets

(19)

(11) Veröffentlichungsnummer: **0 182 233**
**A2**

(12) # EUROPÄISCHE PATENTANMELDUNG

(21) Anmeldenummer: **85114284.4**

(22) Anmeldetag: **09.11.85**

(51) Int. Cl.⁴: **C 08 L 27/06,** C 08 G 63/06
**// (C08L27/06, 67:04)**

(30) Priorität: **17.11.84 DE 3442176**

(43) Veröffentlichungstag der Anmeldung: **28.05.86**
**Patentblatt 86/22**

(84) Benannte Vertragsstaaten: **AT BE CH DE FR GB IT LI NL**

(71) Anmelder: **Henkel Kommanditgesellschaft auf Aktien,**
**Postfach 1100 Henkelstrasse 67,**
**D-4000 Düsseldorf-Holthausen (DE)**

(72) Erfinder: **Anzinger, Hermann, Dr.,**
**Jakob-Kneip-Strasse 146, D-4000 Düsseldorf 13 (DE)**
Erfinder: **Worschech, Kurt, Dr., Alte Strasse 4,**
**D-2854 Loxstedt (DE)**
Erfinder: **Wegemund, Bernd, Dr., Händelweg 3,**
**D-5657 Haan 1 (DE)**
Erfinder: **Ploog, Uwe, Dr., Haydnweg 6,**
**D-5657 Haan 1 (DE)**

(54) **Polyester als Gleitmittel.**

(57) Beschrieben wird die Verwendung kammartiger Polyester auf Basis von langkettigen Hydroxycarbonsäuren und gewünschtenfalls Monocarbonsäuren oder Alkoholen als Gleitmittel für die formgebende Verarbeitung von Polyvinylchlorid oder dessen Copolymeren. Bevorzugt werden Polyester auf Basis von Ricinolsäure oder gehärteter Ricinolsäure eingesetzt.

Henkelstraße 67
4000 Düsseldorf, den 15.11.1984

0182233
HENKEL KGaA
ZR-FE/Patente
Dr. Wi/Br

P a t e n t a n m e l d u n g

D 6944 EP

"Polyester als Gleitmittel"

Die Erfindung betrifft die Verwendung von Polyester mit kammartiger Struktur wie sie durch Eigenkondensation von Hydroxycarbonsäuren mit einer sekundären Hydroxylgruppe hergestellt werden können als Gleitmittel für die formgebende Verarbeitung von Polyvinylchlorid.

Bei der Verarbeitung von thermoplastischen Kunststoffen auf Basis von Polyvinylchlorid, dessen Copolymeren und Polymermischungen zu flächen- oder längsförmigen Halbzeugen treten in der Praxis Schwierigkeiten aufgrund der hohen Viskosität und der starken Klebrigkeit der Polymerschmelzen an materialführenden heißen Metallteilen von Bearbeitungsmaschinen auf. Um diese Schwierigkeiten zu überwinden ist es üblich, Gleitmittel zuzusetzen, die zum einen die Schmelzviskosität reduzieren (innere Gleitwirkung) und zum andern die Klebrigkeit an heißen Metallteilen herabsetzen (äußere Gleitwirkung). Der Zusatz derartiger Hilfsstoffe ist insbesondere bei weichmacherfreien höhermolekularen Produkten von Bedeutung.

Als Gleitmittel für PVC sind bereits eine Vielzahl von Substanzen vorgeschlagen worden. So nennt die DE-B 19 07 768 Ester langkettiger aliphatischer Carbonsäuren (Montansäuren) mit di- oder trifunktionellen Alkoholen (z.B. Glykol oder Glycerin). Derartige Ester, vom Fachmann als Montanester bezeichnet, werden in der Praxis vielfach eingesetzt. Sie weisen jedoch eine Reihe von Nachteilen auf. So setzen sie die Klebfähigkeit

...

von Mischungen aus S-PVC und Schlagfähigkeitsverbesserern auf Basis von Copolymeren aus Methacrylat, Butadien und Styrol nur in ungenügendem Masse herab. Sie senken die Transparenz mancher PVC-Zusammensetzungen und bewirken keine oder keine genügende Herabsetzung der Spaltlast am Kalander. Montansäuren sind ausserdem nicht nachwachsende, fossile Rohstoffe, die nicht überall zugänglich sind.

Aus der europäischen Patentanmeldung 0 0 64 697 sind Gleitmittel bekannt, welche Ester aus Oligomeren von 3 bis 6-wertigen aliphatischen Alkoholen mit mindestens 3 Monomereinheiten und $C_8$-$C_{36}$ gesättigten oder ungesättigten Fettsäuren, wobei 30 bis 100 % alkoholische Hydroxylgruppen verestert sind, darstellen. Derartige Polyetherester ermöglichen zwar die Herstellung von streifenfreien Folien aus Emulsionspolyvinylchlorid nach dem sogenannten Niedertemperatur-Verfahren, doch ist über eine Herabsetzung der Spaltlast beim Kalandrieren nichts ausgesagt.

In Fachkreisen besteht somit ein Bedarf nach einem Gleitmittel, das neben einem ausgewogenen anwendungstechnischen Eigenschaftsbild eine Herabsetzung der Spaltlast am Kalander bewirkt. Zu den geforderten anwendungstechnischen Eigenschaften gehört Farbstabilität (keine Verschlechterung der Farbstabilität des Verarbeitungsgutes) Herabsetzung des Knetwiderstands im Plastografen und Verhinderung einer übermäßigen Verlängerung der Plastifizierzeit. Eine besonders wichtige Eigenschaft ist die Klebfreiheit beim Verarbeiten, die auch beim Zumischen von weiteren Polymeren z.B. von Schlagzähigkeitsverbesserern gewährleistet sein muß.

. . .

0182233
HENKEL KGaA
ZR-FE/Patente

Aufgabe der Erfindung ist es somit, ein Gleitmittel
für die Verarbeitung von PVC bereitzustellen, das
dieses Eigenschaftsbild aufweist.

Gegenstand der Erfindung ist daher die Verwendung von
Polyestern mit kammartigem Aufbau aus

Hydroxycarbonsäuren, die 12 bis 24 C-Atome und
eine sekundäre Hydroxylgruppe enthalten und gewünschtenfalls
Monocarbonsäuren und/oder Glycerin als Kettenabbrecher

als Gleitmittel für die formgebende Verarbeitung
von Polyvinylchlorid und/oder dessen Copolymeren
sowie deren Polymermischungen.

Polyester mit kammartigem Aufbau aus Hydroxycarbonsäuren, die auch eine monofunktionelle Komponente als
Endgruppe enthalten können, sind bereits bekannt. So
werden die Polyester mit einer Carbonsäureendgruppe
am OH-terminalen Ende bereits in der DE-A 24 30 342
beschrieben. US-Patent 2,785,978 beschreibt Veresterungsprodukte der Polymeren am C-terminalen Ende mit mehrfunktionellen Alkoholen. Aus den genannten Literaturstellen ist jedoch kein Hinweis auf die vorteilhaften
Eigenschaften dieser Produkte bei der thermoplastischen
Verarbeitung von Polyvinylchlorid zu entnehmen und auf
deren Fähigkeit beim Kalandrieren die Spaltlast zu
senken und auch in Gegenwart von Schlagzähigkeitsverbesserern die klebfreie Zeit an der Walze zu erhöhen.

Nach einer ersten Ausführungsform der Erfindung werden
reine Polyhydroxycarbonsäuren eingesetzt. Diese sind
herstellbar durch Polykondensation d.h. Veresterung

...

unter Wasserabspaltung aus den reinen Hydroxycarbonsäuren.

Nach einer bevorzugten Ausführungsform der Erfindung
werden Polyhydroxycarbonsäuren eingesetzt, die als
Kettenabbrecher eine Monocarbonsäure enthalten oder
aber Glycerin. Polyester mit terminalen Monocarbonsäuren lassen sich am leichtesten gewinnen, indem
man von natürlich   vorkommenden oder sich von Naturstoffen ableitenden Hydroxycarbonsäuren ausgeht, die
bereits in Abmischung einen gewissen Anteil an Carbonsäuren ohne OH-Funktionalität enthalten. So können
erfindungsgemäß Polymere der Ricinolsäure eingesetzt
werden. Geeignet ist hierzu Ricinolsäure, wie sie als
Verseifungsprodukt von Ricinusöl vorliegt, oder durch
Destillation gereinigte Ricinolsäuren. Dabei wird der
Fachmann die durch Destillation gereinigten, an
kettenabbrechenden monofunktionellen Komponenten ärmeren
Säuren dann einsetzen, wenn höhere Molekulargewichte
angestrebt werden. In gleicher Weise wie Ricinolsäure
kann auch gehärtete Ricinolsäure (12 Hydroxystearinsäure oder daraus durch Destillation gewonnene reinere
Produkte) eingesetzt werden.

Weitere geeignete Polyester basieren auf synthetischen
Hydroxycarbonsäuren natürlichen Ursprungs. Darunter
sind in erster Linie zu verstehen die Hydrierungsprodukte von epoxydierten Fettsäuren. Die Herstellung
derartiger Hydroxycarbonsäuren ist in der DE-A 20 21 530
beschrieben. Danach werden ethylenisch ungesättigte
Fettsäureester in bekannter Weise epoxidiert und mit
Wasserstoff in Gegenwart von Schwermetall-Katalysatoren
der achten Gruppe des Periodensystems zu sekundären

...

Alkoholen hydriert. Die so entstehenden Hydroxycarbonsäureester lassen sich in bekannter Weise zu den
Hydroxycarbonsäuren verseifen. Zur Herstellung der
erfindungsgemäß eingesetzten Polyester können derartige
Hydroxycarbonsäuren auf Basis natürlicher Fettsäuremischungen oder auch gereinigte Produkte eingesetzt
werden. Auch die gereinigten Produkte stellen Isomerengemische dar, d.h. durch Epoxidation von Ölsäure
und anschließende Hydrierung entstehen beispielsweise
9- und 10-Hydroxystearinsäure. Zur Herstellung der
erfindungsgemäß eingesetzten Polyester werden bevorzugt
hoch ungesättigte Fettsäuremischungen der Epoxidation
und Hydrierung unterzogen. Derartige Fettsäuremischungen
wiederum leiten sich beispielsweise von Erdnußöl, Baumwollsaatöl, Sojabohnenöl, Sonnenblumenöl, Leinöl,
Rüböl, tierischen oder seetierischen Ölen ab. Die
daraus hergestellten Hydroxycarbonsäuren enthalten in
erster Linie die isomeren Hydroxystearinsäuren. Diese
können weitere Doppelbindungen enthalten, wenn das
Ausgangsmaterial reich an Linolsäure bzw. Linolensäure
war. Weiterhin können Hydroxycarbonsäuren der Kettenlänge $C_{22}$ anwesend sein, wenn das Ausgangsmaterial
reich an Erucasäure war (Rübölfettsäure).

Bei der Herstellung von Polyestern aus Hydroxycarbonsäuren ist das erzielte Molekulargewicht einerseits
vom Veresterungsgrad und andererseits von der Menge
an kettenabbrechenden Reagenzien abhängig. So liegen
bei einem Veresterungsgrad von 50 % im allgemeinen
Dimere vor, bei 90 % Veresterungsgrad Oligomere mit
im Durchschnitt 10 Hydroxycarbonsäureeinheiten. Verestert man zu praktisch vollständigem Umsatz so läßt
sich das erzielte Molekulargewicht über die Menge der
monofunktionellen Beimengungen einstellen. Werden

...

beispielsweise pro 6 mol Hydroxycarbonsäure 1 mol Fettsäure eingesetzt, so entstehen im Mittel Moleküle aus
6 mol Hydroxycarbonsäure und 1 mol Fettsäure. Bei den
erfindungsgemäß eingesetzten verzweigten Polyester ist
es bevorzugt, 2 bis 20 Gewichtsprozent und insbesondere
5 bis 15 Gewichtsprozent Carbonsäuren ohne weitere
Funktionalität der Kettenlänge $C_8$-$C_{24}$ einzusetzen.
Bevorzugt ist dabei der Einsatz von gesättigten oder
ungesättigten Fettsäuren dieser Kettenlänge. Die so
aufgebauten Polyestermoleküle weisen an einem Kettenende einen Fettsäurerest auf und am anderen Kettenende
eine freie Carboxylgruppe. Die Säurezahl liegt im
allgemeinen im Bereich zwischen 5 mg KOH pro Gramm und
60 mg KOH pro Gramm, vorzugsweise zwischen 20 und 40 mg
KOH pro Gramm.

Für die erfindungsgemäße Verwendung können auch Polyester eingesetzt werden, die an einem Kettenende eine
freie sekundäre Hydroxylgruppe und am anderen Kettenende einen als Ester gebundenen Alkohol, und zwar
vorzugsweise Glycerin enthalten. Derartige Produkte
sind herstellbar, in dem man von Triglyceriden ausgeht,
welche Hydroxycarbonsäuren enthalten und diese unter
Entfernung des Glycerins aus dem Reaktionsgemisch
umestert. Geeignet sind hier Produkte, die eine OH-Zahl
zwischen 50 und 150, insbesondere zwischen 60 und 100
aufweisen. Dabei soll die Gesamtgewichtsmenge des
Glycerins im Polyester 1 bis 15, insbesondere 5 bis 10
Gewichtsprozent betragen.

Für die erfindungsgemäße Anwendung sind Produkte mit
einem Molekulargewicht zwischen 1000 und 5000 bevorzugt.

Während bei Molekulargewichten unter 1000 die Gleitwirkung zurückgeht, sind Produkte über 5000 meist nur
schwierig herstellbar, ohne daß mit dem höheren Molekulargewicht ein spezieller anwendungstechnischer
Vorteil verbunden wäre. Bevorzugt sind daher Produkte
mit Molekulargewicht im Bereich zwischen 1500 und
3000.

Die erfindungsgemäß eingesetzten Polyester mit kammartigem Aufbau werden in den bei Gleitmitteln üblichen
Mengen eingesetzt. So können auf 100 Teile Harz 0,3 bis
3 und vorzugsweise 0,5 bis 1 Gewichtsteile Gleitmittel
verwendet werden.

Die erfindungsgemäße Verwendung der Polyester mit kammartigem Aufbau als Gleitmittel erstreckt sich auf zahlreiche formgebende Bearbeitungsverfahren für Thermoplaste auf Basis von Polyvinylchlorid, Vinylchloridcopolymeren oder von Polymermischungen, die Polyvinylchlorid oder die Copolymeren enthalten. So können die
Produkte bei der Extrusionsverarbeitung, beim Spritzgießen und insbesondere bei der Kalandrierverarbeitung
eingesetzt werden. Bevorzugt ist die Verwendung bei
der Kalandrierverarbeitung. Hierbei sind die Produkte ,
insbesondere bei der Kalandrierverarbeitung von im
wesentlichen weichmacherfreien oder zumindest weichmacherarmen PVC-Typen,besonders nach dem sogenannten
Hochtemperaturverfahren geeignet. Andererseits können
die Produkte aber auch zumindest als Zusätze zu bekannten Verarbeitungsmitteln beim Niedertemperaturkalandrierverfahren mitverwendet werden. Aufgrund ihrer
flüssigen Konsistenz werden hierbei keine Eintrübungen
des Bearbeitungsgutes beobachtet.

...

Die erfindungsgemäße Verwendung erstreckt sich auf die Verarbeitung von Thermoplasten auf Polyvinylchloridbasis, die durch Suspensionspolymerisation (S-PVC), Emulsionspolymerisation (E-PVC) oder Blockpolymerisation im Sinne von Massepolymerisation (M-PVC) hergestellt worden sind. Dabei kann die Zusammensetzung der Rohstoffe in weiten Grenzen variiert werden. Beispielsweise können Homopolymere des Vinylchlorid eingesetzt werden, aber auch dessen Copolymere mit beispielsweise anderen Vinylverbindungen wie Vinylestern, z.B. Vinylacetat oder Vinylethern. Eingesetzt werden können auch Mischungen aus Polyvinylchlorid und/oder dessen Copolymeren mit anderen vinylchloridhaltigen oder vinylchloridfreien Polymeren. So ist es beispielsweise bei der Herstellung von schlagzähen Polyvinylchlorid - Artikeln üblich, dem PVC Copolymere auf Basis (Meth)- Acrylsäureester-Co-Butadien-Co-Styrol oder dergleichen beizumengen. Darüber hinaus können auch andere übliche, vorzugsweise PVC oder dessen Copolymere enthaltende Polymermischungen erfindungsgemäß erfolgreich bearbeitet werden.

...

0182233
HENKEL KGaA
ZR-FE/Patente

## Beispiel 1

Die in den Beispielen 1 und 2 erfindungsgemäß verwendeten Substanzen A und B   waren in der nachstehend beschriebenen Weise hergestellt worden:

### Substanz A

In einem mit Rückflußkühler und Wasserabscheider ausgestatteten Kolben wurde ein Gemisch aus 1000 g technischer 12-Hydroxystearinsäure (Säurezahl 174-180; Hydroxylzahl 154 bis 162; Jodzahl $\leq$ 5; Verseifungszahl 180 bis 186) und 100 ml Xylol 6 Stunden lang zum Rückflußkochen erhitzt. Entstandenes Reaktionswasser wurde laufend über den Wasserabscheider aus dem Reaktionsgemisch entfernt. Daneben wurde kontinuierlich Xylol abdestilliert, so daß die Sumpftemperatur von 140°C am Anfang auf 215°C am Ende anstieg. Anschließend wurde das Gemisch 2 Stunden lang auf dieser Temperatur gehalten. Nach dem Entfernen des restlichen Xylols in Vakuum verblieben 950 g Kondensationsprodukt der technischen 12-Hydroxystearinsäure als gelbes Öl (Säurezahl 35; Molekulargewicht 1900, nach der dampfdruckosmometrischen Methode).

### Substanz B

In einem mit einer Destillierbrücke und Gaseinleitungsrohr versehenen Kolben wurden 1000 g technische Ricinolsäure (Säurezahl 177 bis 182; Hydroxylzahl 150 bis 163; Jodzahl 83 bis 88; Verseifungszahl 180 bis 187) in Gegenwart von 0,1 Gewichtsprozent (1 g) Zinnstaub als Katalysator bei Normaldruck unter Einleiten von Stick-

...

0182233
HENKEL KGaA
ZR-FE/Patente

stoff zunächst 3 Stunden lang auf eine Sumpftemperatur von 205 °C und danach 1 1/2 Stunden lang auf eine Sumpftemperatur von 210 °C erhitzt, wobei das entstandene Wasser laufend aus dem Reaktionsgemisch abdestilliert wurde. Unter Anlegen eines Vakuums 10 bis 50 mbar) wurde dann das Gemisch 2 1/2 Stunden lang auf einer Sumpftemperatur von 210 °C gehalten. Danach waren insgesamt 50 g Wasser übergegangen. Der Rückstand wurde unter Stickstoff auf Raumtemperatur abgekühlt und vom Zinn abdekantiert. Es wurden 950 g Kondensationsprodukt der technischen Ricinolsäure als gelbes Öl (Säurezahl 30; Molekulargewicht 2200, nach der dampfdruckosmometrischen Methode) erhalten.

Durch mechanisches Vermischen der Einzelbestandteile wurden 5 Grundsätze hergestellt:

Grundsatz I

100 Gewichtsteile Suspensions-PVC, K-Wert 60

1,5 Gewichtsteile Dioctylzinnmercaptid (Irgastab (R) 17 MOK)

0,5 Gewichtsteile Gleitmittel.

Grundansatz II

100 Gewichtsteile Suspensions-PVC, K-Wert 60

1,5 Gewichtsteile Dioctylzinnmercaptid

10,0 Gewichtsteile Poly-(meth)-acrylester-co-butadien-co-styrol

0,5 Gewichtsteile Gleitmittel.

Grundansatz III

100 Gewichtsteile Masse-PVC, K-Wert 60

1,5 Gewichtsteile Dioctylzinnmercaptid

0,5 Gewichtsteile Gleitmittel.

...

Grundansatz IV

100 Gewichtsteile Masse-PVC, K-Wert 60

1,5 Gewichtsteile Dioctylzinnmercaptid

10,0 Gewichtsteile Poly-(Meth)-Acrylester-Co-Butadien-
Co-Styrol

0,5 Gewichtsteile Gleitmittel


Grundansatz V

60 Gewichtsteile Suspensions-PVC, K-Wert 60

40 Gewichtsteile Poly-Vinylchlorid-Co-Vinylacetat
(Vinylchloridanteil < 60 Gew.-%)

1,5 Gewichtsteile Dioctylzinnpercaptid

0,5 Gewichtsteile Gleitmittel.


Als Gleitmittel wurden die vorstehend beschriebenen
Substanzen A und B sowie 2 handelsübliche Gleitmittel
nämlich Loxiol[R] G 70 S (Neynaber Chemie, hochmolekularer Dreikomponenten-Ester sowie Wachs E (Ester der
Montansäure mit einem mehrfunktionellen alkoholischen
Alkohol, Höchst AG) eingesetzt.


Zur Bestimmung der Klebfreiheit wurden jeweils 220 g
der Formmassen auf einem Laborwalzwerk der Abmessung
450 x 220 mm (Firma Berstorff) bei einer Walzentemperatur von 200 $^\circ$ und einer Walzendrehzahl von 12,5 min$^{-1}$
im Gleichlauf zu einem umlaufenden Fell ausgewalzt und
das Fell so lange weiterbearbeitet, bis die Formmasse
fest an der Oberfläche einer Walze haften blieb. Die
Spaltbreite zwischen den Walzen war dabei so eingestellt,
daß die Dicke der umlaufenden Felle jeweils 0,5 mm
betrug. In der nachfolgenden Tabelle sind die Zeiten
der Klebfreiheit in Minuten aufgeführt. Wie in einem
Vortest bestimmt, verschlechterte keine  der Substanzen
die Farbstabilität der Formmassen.

...

## T a b e l l e   1

**Klebfreiheit auf der Walze:**

$T = 200\ ^{\circ}C;\ n = 12,5\ \text{Upm};\ E = 220\ g$
(Berstorff Laborwalzwerk   250 x 450 mm)

| Grundansatz: | I | II | III | IV | V |
|---|---|---|---|---|---|
| Loxiol G 70 S | 24' | 20' | 22' | 22' | 12' |
| Wachs E | 24' | 6' | 18' | 6' | 12' |
| Substanz A | 26' | 18' | 22' | 12' | 12' |
| Substanz B | 26' | 18' | 22' | 16' | 12' |

. . .

## Beispiel 2

Das Plastifizierverhalten der im Beispiel 1 beschriebenen Formmasse nach Grundansatz I wurde mit Hilfe eines Plastographen (Plasticorder PL 151; Fa. Brabender; siehe P. Klenk, "Der Plastverarbeiter", 21. Jahrg., 1970/7, S. 642 - 644) geprüft. Die Kammertemperatur betrug 165 $^\circ$C, die Drehzahl 20 Upm. Die Untersuchungen wurden jeweils an 31 g Substanz durchgeführt.

In der nachstehenden Tabelle 2 sind neben der Plastifizierzeit der maximale Knetwiderstand, der Knetwiderstand 15 Minuten nach dem Maximum des Knetwiderstandes angegeben.

...

T a b e l l e   2

Plastizierverhalten der Substanzen A und B
(Grundansatz 1)

| | Gleit-mittel | Plastifizierzeit (min) | Knetwiderstand Maximum | (Nm Sec$^{-1}$) 15 min nach Maximum | Massetemp. ($^{o}$C) 15 min. nach Maximum |
|---|---|---|---|---|---|
| Substanz A | | 7,4 | 23,0 | 19,4 | 162,0 |
| Substanz B | | 7,4 | 23,5 | 19,2 | 162,0 |
| Loxiol$^{(R)}$ G 70 S | | 15,6 | 23,3 | 19,8 | 163,5 |
| ohne Gleit-mittel | | 1,2 | 27,5 | 19,3 | 161,5 |

In einem nachfolgenden Versuch wurde bei der Verarbeitung von Grundmasse 1 die Spaltlast bestimmt. Diese betrug bei dem Marktprodukt Loxiol$^{(R)}$ G 70 S   41,2 kN · cm$^{-1}$, bei Wachs E 40,0 kN · cm$^{-1}$, bei Substanz A 37,3 kN · cm$^{-1}$ und bei Substanz B 39,8 kN · cm$^{-1}$.

...

P a t e n t a n s p r ü c h e

1. Verwendung von Polyestern mit kammartigem Aufbau aus

Hydroxycarbonsäuren, die 12 bis 24 C-Atome und eine sekundäre Hydroxylgruppe enthalten und gewünschtenfalls

Monocarbonsäuren und/oder Glycerin als Kettenabbrecher

als Gleitmittel für die formgebende Verarbeitung von Polyvinylchlorid und/oder dessen Copolymeren sowie deren Polymermischungen.

2. Ausführungsform nach Anspruch 1, dadurch gekennzeichnet, daß man Polyester auf Basis von Hydroxycarbonsäuren einsetzt, die durch Epoxidation ungesättigter Fettsäuren und anschließende Hydrierung der Epoxidgruppe zur Hydroxylgruppe hergestellt worden sind und insbesondere Isomerengemische von 9- und 10-Hydroxystearinsäure enthalten.

3. Ausführungsform nach Anspruch 1, dadurch gekennzeichnet, daß man Polyester auf Basis von Ricinolsäure und/ oder gehärteter Ricinolsäure einsetzt.

4. Ausführungsform nach den Ansprüchen 1 bis 3, dadurch gekennzeichnet, daß man Polyester einsetzt, die als Kettenabbrecher 2 bis 20, insbesondere 5 bis 15 Gewichtsprozent gesättigter oder ungesättigter Monocarbonsäuren der Kettenlänge $C_8$ bis $C_{24}$ enthalten.

. . .

5. Ausführungsform nach den Ansprüchen 1 bis 4, dadurch gekennzeichnet, daß man Polyester einsetzt, die als Kettenabbrecher 1 bis 15, insbesondere 5 bis 10 Gewichtsprozent Glycerin enthalten.

6. Ausführungsform nach den Ansprüchen 1 bis 5, dadurch gekennzeichnet, daß man Polyester mit einem Molekulargewicht (Zahlenmittel) von 1000 bis 5000, vorzugsweise 1500 bis 3000 einsetzt.

7. Ausführungsform nach den Ansprüchen 1 bis 6, dadurch gekennzeichnet, daß man die Polyester in Mengen von 0,3 bis 3, vorzugsweise 0,5 bis 1 Gewichtsteilen pro 100 Gewichtsteile Harz einsetzt.

8. Ausführungsform nach den Ansprüchen 1 bis 7, dadurch gekennzeichnet, daß man die Polyester als Gleitmittel beim Kalandrieren von Polyvinylchlorid und/oder dessen Copolymeren einsetzt.

9. Ausführungsform nach den Ansprüchen 1 bis 8, dadurch gekennzeichnet, daß man die Polyester als Gleitmittel beim Kalandrieren von Mischungen aus Polyvinylchlorid und Poly-methacrylester-co-butadien-co-styrol und/oder Poly-vinylacetat-co-vinylchlorid einsetzt.

10. Ausführungsform nach den Ansprüchen 1 bis 9, dadurch gekennzeichnet, daß man die Polyester beim Kalandrieren von Suspensionspolyvinylchlorid oder Masse-Polyvinylchlorid oder von diese Polymeren überwiegend enthaltenden Mischungen nach dem Hochtemperaturverfahren einsetzt.